(19) **Europäisches Patentamt / European Patent Office / Office européen des brevets**

(11) **EP 4 339 666 A2**

(12) # EUROPEAN PATENT APPLICATION

(43) Date of publication:
**20.03.2024 Bulletin 2024/12**

(21) Application number: **23177390.4**

(22) Date of filing: **05.06.2023**

(51) International Patent Classification (IPC):
**G02B 6/126** (2006.01)

(52) Cooperative Patent Classification (CPC):
**G02B 27/0172**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.06.2022 US 202263348578 P
23.03.2023 US 202318188499**

(71) Applicant: **Meta Platforms Technologies, LLC
Menlo Park, CA 94025 (US)**

(72) Inventors:
- **LIU, Zhaocheng
  Menlo Park, 94025 (US)**
- **Xu, Jian
  Menlo Park, 94025 (US)**

- **PURVIS II, Lafe Joseph
  Menlo Park, 94025 (US)**
- **CHI, Wanli
  Menlo Park, 94025 (US)**
- **AMIRSOLAIMANI, Babak
  Menlo Park, 94025 (US)**
- **HE, Sihui
  Menlo Park, 94025 (US)**
- **FENG, Xiayu
  Menlo Park, 94025 (US)**
- **OUDERKIRK, Andrew John
  Menlo Park, 94025 (US)**
- **RAO, Tingling
  Menlo Park, 94025 (US)**

(74) Representative: **Murgitroyd & Company
165-169 Scotland Street
Glasgow G5 8PL (GB)**

(54) **WAVEGUIDE WITH ORGANIC SOLID CRYSTAL SUBSTRATE**

(57) An optical element includes a waveguide body that is configured to guide light by total internal reflection from an input end to an output end, an input coupling structure located at the input end for coupling light into the waveguide body, and an output coupling structure located at the output end for coupling light out of the waveguide body, where the waveguide body includes a layer of an optically anisotropic organic solid crystal. Such an optical element may have low weight and exhibit good color uniformity while presenting a 2D diagonal field-of-view of at least approximately 10°.

**FIG. 1A**

EP 4 339 666 A2

**Description**

**TECHNICAL FIELD**

The subject matter of this application relates generally to waveguides with an organic solid crystal substrate, and in particular to an optical element having a waveguide body comprising at least one layer of an optically anisotropic organic solid crystal.

**BACKGROUND**

Polymer and other organic materials may be incorporated into a variety of different optic and electro-optic systems and devices, including passive and active optics and electroactive devices. Lightweight and conformable, one or more polymer/organic solid layers may be incorporated into wearable devices such as smart glasses and are attractive candidates for emerging technologies including virtual reality/augmented reality devices where a comfortable, adjustable form factor is desired.

Virtual reality (VR) and augmented reality (AR) eyewear devices or headsets, for instance, may enable users to experience events, such as interactions with people in a computer-generated simulation of a three-dimensional world or viewing data superimposed on a real-world view. By way of example, superimposing information onto a field-of-view may be achieved through an optical head-mounted display (OHMD) or by using embedded wireless glasses with a transparent heads-up display (HUD) or augmented reality (AR) overlay. VR/AR eyewear devices and headsets may be used for a variety of purposes. For example, governments may use such devices for military training, medical professionals may use such devices to simulate surgery, and engineers may use such devices as design visualization aids.

**SUMMARY**

According to a first aspect, there is provided an optical element comprising: a waveguide body extendingfrom an input end to an output end and configured to guide light by total internal reflection from the input end to the output end; an input coupling structure located proximate to the input end for coupling light into the waveguide body; and an output coupling structure located proximate to the output end for coupling light out of the waveguide body, wherein the waveguide body comprises at least one layer of an optically anisotropic organic solid crystal.

The input coupling structure and the output coupling structure may each comprise a plurality of diffractive gratings. The diffractive gratings may be selected from the group consisting of volume Bragg gratings, polarization volume holographic (PVH) gratings and surface relief gratings (SRG). The diffractive gratings may comprise binary phase gratings or slanted gratings. The optical element may comprise a planar waveguide. The optical element may comprise a non-planar waveguide. The at least one organic solid crystal layer may comprise a molecule selected from the group consisting of anthracene, tetracene, pentacene, saturated or unsaturated polycyclic hydrocarbons, nitrogen-, sulfur-, or oxygen-containing heterocycles, quinolines, benzothiophenes, benzopyrans, bent and asymmetric acenes, 2,6-naphthalene dicarboxylic acid, and 2,6-dimethyl carboxylic esters. The at least one organic solid crystal layer may comprise a single crystal. The waveguide body may comprise a refractive index of at least approximately 1.5 and a birefringence of at least approximately 0.01. The waveguide body may comprise principal refractive indices ($n_x$, $n_y$, $n_z$), wherein $n_x{\neq}n_y{\neq}n_z$, $n_x{=}n_y{\neq}n_z$, $n_x{=}n_z{\neq}n_y$, or $n_y{=}n_z{\neq}n_x$. The optical element may present a 2D diagonal field-of-view of at least approximately 10°. The waveguide body may comprise a single optically anisotropic organic solid crystal layer having a thickness of less than approximately 600 micrometers. The waveguide body may comprise a pair of optically anisotropic organic solid crystal layers. The waveguide body may have a thickness of less than approximately 1.5 mm. The waveguide body may comprise three optically anisotropic organic solid crystal layers. The waveguide body may have a thickness of less than approximately 1.8 mm.

According to a second aspect, there is provided a waveguide comprising: at least one substrate comprising an optically anisotropic organic solid crystal layer; and a coupling structure disposed over each organic solid crystal layer.

The at least one substrate may comprise a single crystal organic solid crystal layer. Each organic solid crystal layer may comprise a refractive index of at least approximately 1.5 and a birefringence of at least approximately 0.01. The coupling structure may comprise a planar or slanted polarization volume holographic (PVH) grating.

According to a third aspect, there is provided a waveguide comprising: an optically anisotropic organic solid crystal substrate configured to guide light; and a plurality of diffractive gratings disposed over the optically anisotropic organic solid crystal substrate, wherein the optically anisotropic organic solid crystal comprises a refractive index of at least approximately 1.5 and a birefringence of at least approximately 0.01.

The optically anisotropic organic solid crystal substrate may present a 2D diagonal field-of-view of at least approximately 10°.

## BRIEF DESCRIPTION OF THE DRAWINGS

The accompanying drawings illustrate a number of examples and are a part of the specification, but are not limiting on the scope of the invention. The scope of the invention is set out in the claims appended hereto. Together with the following description, these drawings demonstrate and explain various principles of the instant disclosure.

FIGS. 1A and 1B are perspective views of example organic solid crystal-based planar waveguides.
FIG. 2 is a perspective view of an example organic solid crystal-based bilayer waveguide.
FIGS. 3A and 3B show the crystalline orientation within example organic solid crystal su bstrates.
FIGS. 4A-4D are cross-sectional views of organic solid crystal-based planar waveguides.
FIGS. 5A and 5B are cross-sectional views of example diffractive grating architectures.
FIG. 6 is a cross-sectional schematic illustrating the 1D field-of-view for an example planar waveguide.
FIG. 7 shows the operation of an example planar waveguide.
FIGS. 8A and 8B illustrate a 2D expansion and k-space rendering for an example wide field-of-view waveguide.
FIGS. 9A and 9B illustrate a $2\times1$D expansion and k-space rendering for an example wide field-of-view waveguide.
FIG. 10 shows a k-space rendering for an example wide field-of-view waveguide.
FIG. 11 illustrates a stacked waveguide having a pair of organic solid crystal substrates.
FIG. 12 is an illustration of exemplary augmented-reality glasses that may be used in connection with embodiments of this disclosure.
FIG. 13 is an illustration of an example virtual-reality headset that may be used in connection with embodiments of this disclosure.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the instant disclosure covers all modifications, equivalents, and alternatives falling within the scope of the appended claims.

## DETAILED DESCRIPTION

In connection with exemplary embodiments and applications, a system or device may include an optical element such as a waveguide for guiding light. Waveguides based on 1D or 2D pupil expansion may rely on a high refractive index substrate to deliver a wide field-of-view (FOV). In comparative approaches, plural high index substrates (e.g., high index glasses, SiC, $LiNbO_3$, etc.) may be stacked. However, the increased weight and thickness associated with such architectures may challenge form factor and wearability considerations for associated optics, including eyeglasses and headsets. Notwithstanding recent developments, it would be advantageous to provide lightweight and versatile optical elements in associated systems/devices that provide an improved viewing experience, including a wide field-of-view, optical clarity, and color uniformity.

As disclosed herein, an optical element such as a planar waveguide may include a waveguide body that is configured to guide light by total internal reflection from an input end to an output end, an input coupling structure located at the input end for coupling light into the waveguide body, and an output coupling structure located at the output end for coupling light out of the waveguide body. The waveguide body itself may include one or more layers of an organic solid crystal (OSC) material. Such an optical element may have low weight and exhibit good optical efficiency. In some instantiations, an optical element may include a plurality of waveguide bodies, such as in a stacked configuration. That is, a waveguide may include one or more OSC substrates, e.g., one, two, or three OSC substrates, and may be characterized by a wide field-of-view.

According to some embodiments, a waveguide body may include an optically anisotropic organic or organo-metallic material having principal refractive indices ($n_x$, $n_y$, $n_z$), where at least two principal refractive index values are different from each other, i.e., $n_x \neq n_y \neq n_z$ or $n_x = n_y \neq n_z$ or $n_x = n_y = n_z$ or $n_x = n_z \neq n_y$. In some embodiments, the largest principal refractive index may be at least approximately 1.5, e.g., at least 1.5, at least 1.6, at least 1.7, at least 1.8, or at least 1.9. In a waveguide body, the largest birefringence (difference between highest and lowest principal indices) may be at least approximately 0.01, e.g., at least approximately 0.01, at least approximately 0.02, at least approximately 0.05, or at least approximately 0.1, including ranges between any of the foregoing values, and the smallest birefringence (difference between any two principal indices that are unequal to the largest birefringence) may range from 0 to a value less than the difference between the highest and lowest principal indices.

In the example of a single plate waveguide, the substrate thickness may be less than approximately 600 micrometers, e.g., less than 500 micrometers or less than 400 micrometers. In the example of a dual plate waveguide, the total thickness of the waveguide may be less than approximately 1.5 mm, e.g., less than 1 mm or less than 0.8 mm. In the example of a triple plate waveguide, the total thickness of the waveguide may be less than approximately 1.8 mm, e.g., less than 1.5 mm or less than 1.2 mm. Example waveguides may support a 2D diagonal view of at least approximately 10°, e.g., at least 10°, at least 20°, at least 30°, or at least 45°, including ranges between any of the foregoing values.

An optical element may be configured such that a rotational angle between a principal index coordination for the waveguide body and a surface of the waveguide provides optimized color uniformity. An optical element may include an alignment layer (e.g., a photoalignment layer) that directly overlies a PVH grating to template orientation of liquid crystal molecules within the grating. Optionally, a multilayer including a PVH grating and an alignment layer may be configured to provide grating multiplexing for optimization of image quality.

An input grating and an output grating may be respectively coupled to a waveguide substrate and configured to direct light into and out of the substrate. The grating(s) may include volume Bragg gratings, surface relief gratings or polarization volume holographic gratings, for example, and may be binary, slanted, or combinations thereof. A waveguide may additionally include an input coupler that is configured to guide light into the waveguide and an output coupler that is configured to guide light to a viewing location. An optional expander may be arranged to guide light from the input coupler to the output coupler.

In conjunction with various methods of manufacture, solvent-, melt-, or vapor-based crystal growth processes may be used to produce sized organic solid crystals, which may be diced and polished along designated orientations. Surface relief gratings may be fabricated through the deposition and etching of a liquid crystal layer disposed over an oriented organic solid crystal substrate, or by using pattern transfer processes such as nanoimprinting.

One example method of fabricating an optical element may include depositing a photoalignment layer over an OSC substrate, patterning the photoalignment layer (e.g., using a polarized laser), depositing a liquid crystal layer over the patterned photoalignment layer, and curing the liquid crystal layer to fix an induced orientation therein.

A further example method of fabricating an optical element may include depositing a photoalignment layer over a transfer layer, patterning the photoalignment layer (e.g., using a polarized laser), depositing a liquid crystal layer over the patterned photoalignment layer, curing the liquid crystal layer to fix an induced orientation therein, and transferring the liquid crystal layer and the patterned photoalignment layer to an organic solid crystal waveguide body. An optical element may include a planar or non-planar waveguide, for example.

One or more source materials may be used to form an organic solid crystal substrate or thin film, including a multilayer thin film. Example organic materials may include various classes of crystallizable organic semiconductors. In accordance with various embodiments, organic semiconductors may include small molecules, macromolecules, liquid crystals, organometallic compounds, oligomers, and polymers. Organic semiconductors may include p-type, n-type, or ambipolar polycyclic aromatic hydrocarbons, such as benzene, naphthalene, phenanthrene, anthracene, tetracene, pentacene, 2,6-naphthalene dicarboxylic acid, and 2,6-dimethyl carboxylic esters. Example compounds may include cyclic, linear and/or branched structures, which may be saturated or unsaturated, and may additionally include heteroatoms and/or saturated or unsaturated heterocycles, such as furan, pyrrole, thiophene, pyridine, pyrimidine, piperidine, and the like. Heteroatoms may include nitrogen, sulfur, oxygen, phosphorus, selenium, tellurium, fluorine, chlorine, bromine, or iodine, as well as various metals.

Compounds may be chelated to metals, such as copper phthalocyanine. Crystals can also be doped with other materials including metals, iodine, and other organic semiconductors. Suitable feedstock for molding solid organic semiconductor materials may include neat organic compositions, melts, solutions, or suspensions containing one or more of the organic materials disclosed herein.

Structurally, the disclosed organic materials, as well as the thin films and substrates derived therefrom, may be single crystal, polycrystalline, or glassy. Organic solid crystals may include closely packed structures (e.g., organic molecules) that exhibit desirable optical properties such as a high and tunable refractive index, and high birefringence. Optically anisotropic organic solid materials may include a preferred packing of molecules or a preferred orientation or alignment of molecules.

Such organic solid crystal (OSC) materials may provide functionalities, including phase modulation, beam steering, wave-front shaping and correction, optical communication, optical computation, holography, and the like. Due to their optical and mechanical properties, organic solid crystals may enable high-performance devices, and may be incorporated into passive or active optics, including AR/VR headsets, and may replace comparative material systems in whole or in part, such as polymers, inorganic materials, and liquid crystals. In certain aspects, organic solid crystals may have optical properties that rival those of inorganic crystals while exhibiting the processability and electrical response of liquid crystals.

Due to their relatively low melting temperature, organic solid crystal materials may be molded to form a desired structure. Molding processes may enable complex architectures and may be more economical than the cutting, grinding, and polishing of bulk crystals. In one example, a single crystal or polycrystalline shape such as a thin film or bulk substrate may be partially or fully melted into a desired form and then controllably cooled to form a single crystal.

A process of molding an optically anisotropic crystalline or partially crystalline thin film or substrate, for example, may include operational control of the thermodynamics and kinetics of nucleation and crystal growth. In certain embodiments, a temperature during molding proximate to a nucleation region of a mold may be less than a melting onset temperature ($T_m$) of a molding composition, while the temperature remote from the nucleation region may be greater than the melting onset temperature. Such a temperature gradient paradigm may be obtained through a spatially applied thermal gradient, optionally in conjunction with a selective melting process (e.g., laser, heat lamps, etc.) to remove excess nuclei, leaving few nuclei (e.g., a single nucleus) for crystal growth.

To promote nucleation and crystal growth, a selected temperature and temperature gradient may be applied to a crystallization front of a nascent thin film or substrate. For instance, the temperature and temperature gradient proximate to the crystallization front may be determined based on the selected feedstock (i.e., molding composition), including its melting temperature, thermal stability, and rheological attributes.

A suitable mold for molding an organic solid thin film or substrate may be formed from a material having a softening temperature or a glass transition temperature ($T_g$) greater than the melting onset temperature ($T_m$) of the molding composition. The mold may include any suitable material, e.g., silicon, silicon dioxide, fused silica, quartz, glass, nickel, silicone, siloxanes, perfluoropolyethers, polytetrafluoroethylenes, perfluoroalkoxy alkanes, polyimide, polyethylene naphthalate, polyvinylidene fluoride, polyphenylene sulfide, and the like.

An epitaxial or non-epitaxial growth process may be used to form an organic solid crystal (OSC) layer over a suitable substrate or mold. A seed crystal for encouraging crystal nucleation and an anti-nucleation layer configured to locally inhibit nucleation may separately or collectively promote the formation of a limited number of crystal nuclei within one or more specified location(s), which may in turn encourage the formation of larger, contiguous organic solid crystals. In some embodiments, a nucleation-promoting layer or seed crystal may itself be configured as a thin film.

Example nucleation-promoting or seed materials may include one or more metallic or inorganic elements or compounds, such as Pt, Ag, Au, Al, Pb, indium tin oxide, $SiO_2$, and the like. Further example nucleation-promoting or seed crystal materials may include organic compounds, such as a polyimide, polyamide, polyurethane, polyurea, polythiolurethane, polyethylene, polysulfonate, polyolefin, as well as mixtures and combinations thereof. Further example nucleation-promoting materials include small molecule organic single crystals, such as single crystals of anthracene, pentathiophene, tolane, and the like. In some examples, a nucleation-promoting material may be configured as a textured or aligned layer, such as a rubbed polyimide or photoalignment layer, which may be configured to induce directionality or a preferred orientation to an over-formed organic solid crystal thin film.

An example method for manufacturing an organic solid crystal thin film or substrate includes providing a mold, forming a layer of a nucleation-promoting material over at least a portion of a surface of the mold, and depositing a layer of molten feedstock over the surface of the mold and in contact with the layer of the nucleation-promoting material, while maintaining a temperature gradient across the layer of the molten feedstock.

An anti-nucleation layer may include a dielectric material. In further embodiments, an anti-nucleation layer may include an amorphous material. In example processes, crystal nucleation may be homogeneous or heterogeneous and may occur independent of the substrate or mold.

In some embodiments, a surface treatment or release layer disposed over the substrate or mold may be used to control nucleation and growth of the organic solid crystal (OSC) and later promote separation and harvesting of a bulk crystal or thin film. For instance, a coating having a solubility parameter mismatch with the deposition chemistry may be applied to the substrate (e.g., globally or locally) to suppress interaction between the substrate and the crystallizing layer during the deposition process.

Example surface treatment coatings may include oleophobic coatings or hydrophobic coatings. A thin layer, e.g., monolayer or bilayer, of an oleophobic material or a hydrophobic material may be used to condition the substrate or mold prior to an epitaxial process. The coating material may be selected based on the substrate and/or the organic crystalline material. Further example surface treatment coating materials include siloxanes, fluorosiloxanes, phenyl siloxanes, fluorinated coatings, polyvinyl alcohol, and other OH bearing coatings, acrylics, polyurethanes, polyesters, polyimides, and the like.

In some embodiments, a release agent may be applied to an internal surface of the mold and/or combined with the molding composition. A surface treatment of an inner surface of the mold may include the chemical bonding or physical adsorption of small molecules, or polymers/oligomers having linear, branched, dendritic, or ringed structures, that may be functionalized or terminated, for example, with fluorinated groups, silicones, or hydrocarbon groups.

A buffer layer may be formed over the deposition surface of a substrate or mold. A buffer layer may include a small molecule that may be similar to or even equivalent to the small molecule forming the organic solid crystal, e.g., an anthracene single crystal. A buffer layer may be used to tune one or more properties of the deposition/growth surface of the substrate or mold, including surface energy, wettability, crystalline or molecular orientation, etc.

A further example method for manufacturing an organic solid crystal thin film includes forming a layer of a molecular feedstock over a surface of a mold, the molecular feedstock including crystallizable organic molecules, forming a selected number of crystal nuclei from the organic molecules within a nucleation region of the molecular feedstock layer, and growing the selected number of crystal nuclei to form an organic solid crystal thin film or substrate (i.e.,

waveguide body). In some embodiments, the selected number of crystal nuclei may be one. Crystal growth may be controlled using an isothermal process, slow cooling, and zone annealing.

In some embodiments, an additive may be used to encourage the growth of a single crystal and/or its release from a mold. In some embodiments, in addition to the precursor (i.e., crystallizable organic molecules) for the organic solid crystal, a molecular feedstock may include an additive selected from polymers, oligomers, and small molecules, where the additive may have a melting onset temperature of at least approximately 20°C less than a melting onset temperature of the organic solid crystal precursor, e.g., 20°C, 30°C, or even 40°C less than the melting onset temperature of the molding composition. An additive may promote crystal growth and the formation of a large crystal size. In some embodiments, an additive may be integrated with a molding process to improve the characteristics of a molded organic solid thin film or substrate, including its surface roughness.

During an act of molding, and in accordance with particular embodiments, a cover plate may be applied to a free surface of the organic solid crystal thin film. The cover plate may be oriented at an angle with respect to a major surface of the thin film. A force may be applied to the cover plate to generate capillary forces that facilitate mass transport of the molten feedstock, i.e., between the cover plate and the substrate and in the direction of a crystallization front of a growing crystalline thin film. In some embodiments, such as through vertical orientation of the deposition system, the force of gravity may contribute to mass transport and the delivery of the molten feedstock to the crystallization front. Suitable materials for the cover plate and the substrate may independently include silicon dioxide, fused silica, high index glasses, high index inorganic crystals, and high melting temperature polymers (e.g., siloxanes, polyimides, PTFE, PFA, etc.), although further material compositions are contemplated. In particular embodiments, a substrate supporting an OSC thin film may include an organic solid crystal.

According to particular embodiments, a method of forming an organic solid crystal (OSC) may include contacting an organic precursor (i.e., crystallizable organic molecules) with a non-volatile medium material, forming a layer including the organic precursor over a surface of a substrate or mold, and processing the organic precursor to form an organic crystalline phase, where the organic crystalline phase may include a preferred orientation of molecules.

The act of contacting the organic precursor with the non-volatile medium material may include forming a homogeneous mixture of the organic precursor and the non-volatile medium material. In further embodiments, the act of contacting the organic precursor with the non-volatile medium material may include forming a layer of the non-volatile medium material over a surface of a substrate or mold and forming a layer of the organic precursor over the layer of the non-volatile medium material.

In some embodiments, a non-volatile medium material may be disposed between the mold surface and the organic precursor and may be adapted to decrease the surface roughness of the molded organic thin film and promote its release from the mold while locally inhibiting nucleation of a crystalline phase.

Example non-volatile medium materials include liquids such as silicone oil, a fluorinated polymer, a polyolefin and/or polyethylene glycol. Further example non-volatile medium materials may include crystalline materials having a melting temperature that is greater than the melting temperature of the organic precursor material. In some embodiments the mold surface may be pre-treated in order to improve wetting and/or adhesion of the non-volatile medium material.

The substrate or mold may include a surface configured to provide a desired shape to the molded organic solid thin film. For example, the substrate or mold surface may be planar, concave, or convex, and may include a three-dimensional architecture, such as surface relief gratings, or a curvature (e.g., compound curvature) configured to form microlenses, microprisms, or prismatic lenses. According to some embodiments, a substrate or mold geometry may be transferred and incorporated into a surface of an over-formed organic solid crystal thin film. For the sake of convenience, the terms "substrate" and "mold" may be used interchangeably herein unless the context indicates otherwise.

The deposition surface of a substrate or mold may include a functional layer that is configured to be transferred to the organic solid crystal after formation of the organic solid crystal, i.e., notwithstanding separation of the organic solid crystal from the substrate or mold. Functional layers may include an interference coating, an AR coating, a reflectivity enhancing coating, a bandpass coating, a band-block coating, blanket or patterned electrodes, etc. By way of example, an electrode may include any suitably electrically conductive material such as a metal, a transparent conductive oxide (TCO) (e.g., indium tin oxide or indium gallium zinc oxide), or a metal mesh or nanowire matrix (e.g., including metal nanowires or carbon nanotubes).

In lieu of, or in addition to, molding, further example deposition methods for forming organic solid crystals include vapor phase growth, solid state growth, melt-based growth, solution growth, etc., optionally in conjunction with a suitable substrate and/or seed crystal. A substrate may be organic or inorganic. By way of example, thin film solid organic materials may be manufactured using one or more processes selected from chemical vapor deposition and physical vapor deposition. Further coating processes, e.g., from solution or a melt, may include 3D printing, ink jet printing, gravure printing, doctor blading, spin coating, and the like. Such processes may induce shear during the act of coating and accordingly may contribute to crystallite or molecular alignment and a preferred orientation of crystallites and/or molecules within an organic solid crystal thin film. A still further example method may include pulling a free-standing crystal from a melt. According to some embodiments, solid-, liquid-, or gas-phase deposition processes may include epitaxial processes.

As used herein, the terms "epitaxy," "epitaxial" and/or "epitaxial growth and/or deposition" refer to the nucleation and growth of an organic solid crystal on a deposition surface where the organic solid crystal layer being grown assumes the same crystalline habit as the material of the deposition surface. For example, in an epitaxial deposition process, chemical reactants may be controlled, and the system parameters may be set so that depositing atoms or molecules alight on the deposition surface and remain sufficiently mobile via surface diffusion to orient themselves according to the crystalline orientation of the atoms or molecules of the deposition surface. An epitaxial process may be homogeneous or heterogeneous.

In accordance with various embodiments, the optical and electrooptical properties of an organic solid crystal thin film may be tuned using doping and related techniques. Doping may influence the polarizability of an organic solid crystal, for example. The introduction of dopants, i.e., impurities, into an organic solid crystal, may influence, for example, the highest occupied molecular orbital (HOMO) and lowest unoccupied molecular orbital (LUMO) bands and hence the band gap thereof, induced dipole moment, and/or molecular/crystal polarizability.

Doping may be performed *in situ,* i.e., during epitaxial growth, or following epitaxial growth, for example, using ion implantation or plasma doping. In exemplary embodiments, doping may be used to modify the electronic structure of an organic solid crystal without damaging molecular packing or the crystal structure itself. In this vein, a post-implantation annealing step may be used to heal crystal defects introduced during ion implantation or plasma doping. Annealing may include rapid thermal annealing or pulsed annealing, for example.

Doping changes the electron and hole carrier concentrations of a host material at thermal equilibrium. A doped organic solid crystal may be p-type, n-type, or ambipolar. As used herein, "p-type" refers to the addition of impurities to an organic solid crystal that create a deficiency of valence electrons, whereas "n-type" refers to the addition of impurities that contribute free electrons to an organic solid crystal. Without wishing to be bound by theory, doping may influence "π-stacking" and "π-π interactions" within an organic solid crystal.

Example dopants include Lewis acids (electron acceptors) and Lewis bases (electron donors). Particular examples include charge-neutral and ionic species, e.g., Brønsted acids and Brønsted bases, which in conjunction with the aforementioned processes may be incorporated into an organic solid crystal by solution growth or co-deposition from the vapor phase. In particular embodiments, a dopant may include an organic molecule, an organic ion, an inorganic molecule, or an inorganic ion. A doping profile may be homogeneous or localized to a particular region (e.g., depth and/or area) of an organic solid crystal.

During nucleation and growth, the orientation of the in-plane axes of an OSC thin film may be controlled using one or more of substrate temperature, deposition pressure, solvent vapor pressure, or non-solvent vapor pressure. High refractive index and highly birefringent organic solid thin films may be supported by a substrate or mold or removed therefrom to form a free-standing thin film. A substrate, if used, may be rigid or deformable.

Example processes may be integrated with a real-time feedback loop that is configured to assess one or more attributes of the organic solid crystal and accordingly adjust one or more process variables, including melt temperature, mold temperature, feedstock injection rate into a mold, etc.

Following deposition, an OSC thin film may be diced and polished to achieve a desired form factor and surface quality. Dicing may include diamond turning, for example, although other cutting methods may be used. Polishing may include chemical mechanical polishing. In some embodiments, a chemical or mechanical surface treatment may be used to create structures on a surface of an OSC thin film or substrate. Example surface treatment methods include diamond turning and photolithography and etch processes. In some embodiments, a cover plate or substrate with reciprocal structures may be used to fabricate surface structures in an OSC thin film.

An organic thin film may include a surface that is planar, convex, or concave. In some embodiments, the surface may include a three-dimensional architecture, such as a periodic surface relief grating. In further embodiments, an OSC thin film or substrate may be configured as a microlens or a prismatic lens. For instance, polarization optics may include a microlens that selectively focuses one polarization of light over another. In some embodiments, a structured surface may be formed *in situ,* e.g., during crystal growth of the organic solid crystal thin film over a suitably shaped mold. In further embodiments, a structured surface may be formed after crystal growth, e.g., using additive or subtractive processing, such as 3D printing or photolithography and etching. The nucleation and growth kinetics and choice of chemistry may be selected to produce a solid organic crystal thin film having areal (lateral) dimensions of at least approximately 1 cm.

The organic crystalline phase may be single crystal or polycrystalline. In some embodiments, the organic crystalline phase may include amorphous regions. In some embodiments, the organic crystalline phase may be substantially crystalline. The organic crystalline phase may be characterized by a refractive index along at least one principal axis of at least approximately 1.5 at 589 nm. By way of example, the refractive index of the organic crystalline phase at 589 nm and along at least one principal axis may be at least approximately 1.5, at least approximately 1.6, at least approximately 1.7, at least approximately 1.8, at least approximately 1.9, at least approximately 2.0, at least approximately 2.1, at least approximately 2.2, at least approximately 2.3, at least approximately 2.4, at least approximately 2.5, or at least approximately 2.6, including ranges between any of the foregoing values.

In some embodiments, the organic crystalline phase may be characterized by a birefringence ($\Delta n$) (where $n_1 \neq n_2 \neq n_3$, $n_1 \neq n_2 = n_3$, or $n_1 = n_2 \neq n_3$) of at least approximately 0.01, e.g., at least approximately 0.01, at least approximately 0.02, at least approximately 0.05, at least approximately 0.1, at least approximately 0.2, at least approximately 0.3, at least approximately 0.4, or at least approximately 0.5, including ranges between any of the foregoing values. In some embodiments, a birefringent organic crystalline phase may be characterized by a birefringence of less than approximately 0.01, e.g., less than approximately 0.01, less than approximately 0.005, less than approximately 0.002, or less than approximately 0.001, including ranges between any of the foregoing values.

Three axis ellipsometry data for example isotropic or anisotropic organic molecules are shown in Table 1. The data include predicted and measured refractive index values and birefringence values for 1,2,3-trichlorobenzene (1,2,3-TCB), 1,2-diphenylethyne (1,2-DPE), and phenazine. Shown are larger than anticipated refractive index values and birefringence compared to calculated values based on the HOMO-LUMO gap for each organic material composition.

Table 1. Index and Birefringence Data for Example Organic Semiconductors

| Organic Material | Predicted Index | Measured Index (589 nm) | | | Birefringence | | |
|---|---|---|---|---|---|---|---|
| | | nx | ny | nz | $\Delta n(xy)$ | $\Delta n(xz)$ | $\Delta n(yz)$ |
| 1,2,3-TCB | 1.567 | 1.67 | 1.76 | 1.85 | 0.09 | 0.18 | 0.09 |
| 1,2-DPE | 1.623 | 1.62 | 1.83 | 1.63 | 0.18 | 0.01 | 0.17 |
| phenazine | 1.74 | 1.76 | 1.84 | 1.97 | 0.08 | 0.21 | 0.13 |

Organic solid thin films, including multilayer organic solid thin films, may be optically transparent and exhibit low bulk haze. As used herein, a material or element that is "transparent" or "optically transparent" may, for a given thickness, have a transmissivity within the visible light and/or near-IR spectra of at least approximately 60%, e.g., approximately 60, 65, 70, 75, 80, 90, 95, 97, 98, 99, or 99.5%, including ranges between any of the foregoing values, and less than approximately 5% bulk haze, e.g., approximately 0.1, 0.2, 0.4, 1, 2, or 4% bulk haze, including ranges between any of the foregoing values. Transparent materials will typically exhibit very low optical absorption and minimal optical scattering.

As used herein, the terms "haze" and "clarity" may refer to an optical phenomenon associated with the transmission of light through a material, and may be attributed, for example, to the refraction of light within the material, e.g., due to secondary phases or porosity and/or the reflection of light from one or more surfaces of the material. As will be appreciated, haze may be associated with an amount of light that is subject to wide angle scattering (i.e., at an angle greater than 2.5° from normal) and a corresponding loss of transmissive contrast, whereas clarity may relate to an amount of light that is subject to narrow angle scattering (i.e., at an angle less than 2.5° from normal) and an attendant loss of optical sharpness or "see through quality."

In some embodiments, one or more organic solid thin film layers may be diced and stacked to form a multilayer. A multilayer thin film may be formed by clocking and stacking individual layers. That is, in an example "clocked" multilayer stack, an angle of refractive index misorientation between successive layers may range from approximately 1° to approximately 90°, e.g., 1, 2, 5, 10, 20, 30, 40, 45, 50, 60, 70, 80, or 90°, including ranges between any of the foregoing values.

In example multilayer substrate architectures, the thickness of each layer may be determined from an average value of in-plane refractive indices ($n_2$ and $n_3$), where $(n_2+n_3)/2$ may be greater than approximately 1.5, e.g., greater than 1.5, greater than 1.55, or greater than 1.6. Generally, the thickness of a given layer may be inversely proportional to the arithmetic average of its in-plane indices. In a similar vein, the total number of layers in a multilayer stack may be determined from the in-plane birefringence ($|n_3-n_2|$), which may be greater than approximately 0.01, e.g., greater than 0.01, greater than 0.02, greater than 0.05, greater than 0.1, or greater than 0.2.

In a multilayer architecture, the thickness of each OSC layer may be constant or variable. In some examples, the OSC layer thickness may vary throughout the stack. The OSC layer thickness may vary continuously, for instance, with the thickness increasing for each successive layer throughout the multilayer.

According to some embodiments, for a given biaxially-oriented organic solid material layer within a multilayer stack, the out-of-plane index ($n_1$) may be related to the in-plane refractive indices ($n_2$ and $n_3$) by the relationship

$$n_1 = \frac{1}{2\pi} \int_0^{2\pi} \sqrt{(n_2 \sin \varphi)^2 + (n_3 \cos \varphi)^2} \, d\varphi$$

, where $\varphi$ represents a rotation angle of a refractive index vector between adjacent layers. The variation in $n_1$ may be less than $\pm 0.7$, less than $\pm 0.6$, less than $\pm 0.5$, less than $\pm 0.4$, less than $\pm 0.3$, or less than $\pm 0.2$.

According to some embodiments, a multilayer may include OSC material layers and secondary material layers arranged in an ABAB... repeating structure. The secondary material layers may include one or more of an amorphous polymer, amorphous inorganic compound, or liquid crystal.

As will be appreciated, one or more characteristics of organic solid crystals may be specifically tailored for a particular application. For many optical applications, for instance, it may be advantageous to control crystallite size, surface roughness, mechanical strength and toughness, and the orientation of crystallites and/or molecules within an organic solid crystal thin film. In a multilayer architecture, the composition, structure, and properties of each organic layer may be independently selected.

Organic solid crystals (e.g., OSC thin films) may be incorporated into passive and active optical waveguides, resonators, lasers, optical modulators, etc. Further example active optics include projectors and projection optics, ophthalmic high index lenses, eye-tracking, gradient-index optics, Pancharatnam-Berry phase (PBP) lenses, microlenses, pupil steering elements, optical computing, fiber optics, rewritable optical data storage, all-optical logic gates, multi-wavelength optical data processing, optical transistors, etc. According to further embodiments, organic solid crystals (e.g., OSC thin films or substrates) may be incorporated into passive optics, such as waveguides, reflective polarizers, refractive/diffractive lenses, and the like. Related optical elements for passive optics may include waveguides, polarization selective gratings, Fresnel lenses, microlenses, geometric lenses, PBP lenses, and multilayer thin films.

Disclosed herein are wide field-of-view waveguides that include organic solid crystals (OSCs). The disclosed waveguides are advantageously low weight and exhibit a relatively slim form factor. Also disclosed are display devices and systems that include such waveguides.

In one example embodiment, a display system includes a projector, an optical configuration configured to receive light from the projector and direct the received light to a waveguide, where the waveguide is configured to receive the light from the optical configuration and direct the light to a viewing location. The waveguide may include a substrate formed from an organic or organo-metallic material (e.g., an OSC) and a plurality of gratings disposed over and in contact with at least one surface of the substrate.

Features from any of the above-mentioned embodiments may be used in combination with one another according to the general principles described herein. These and other embodiments, features, and advantages will be more fully understood upon reading the following detailed description in conjunction with the accompanying drawings and claims.

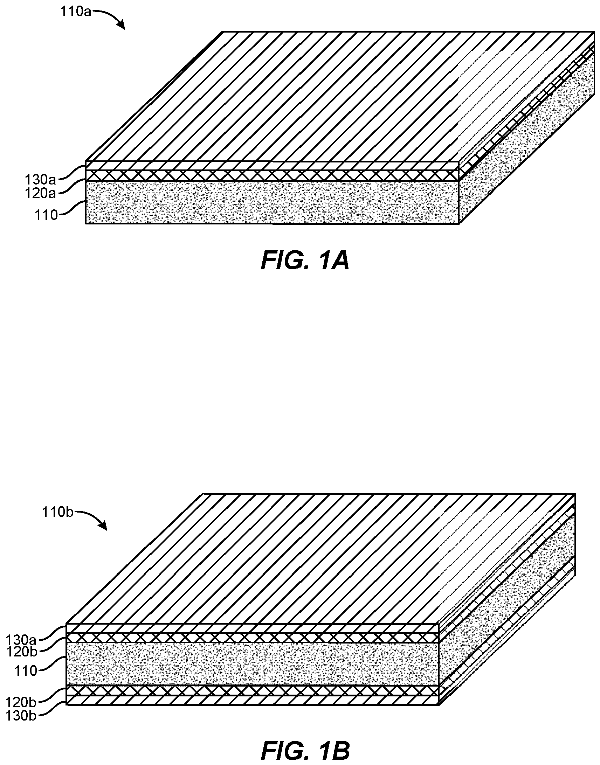

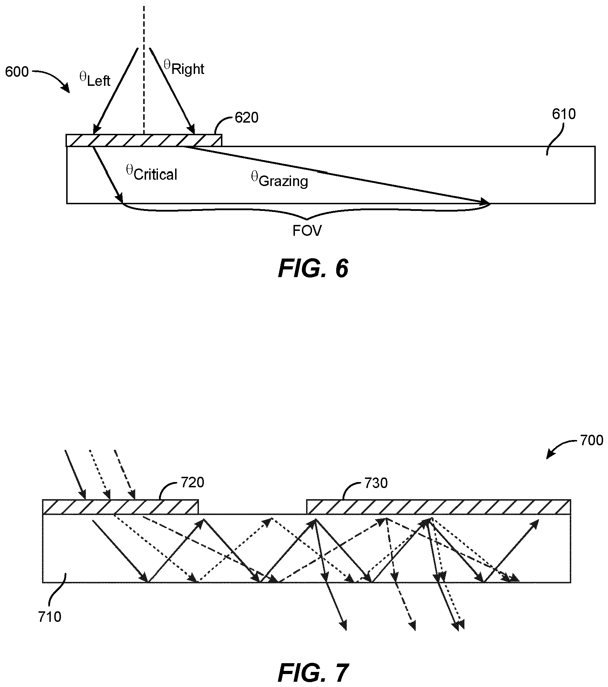

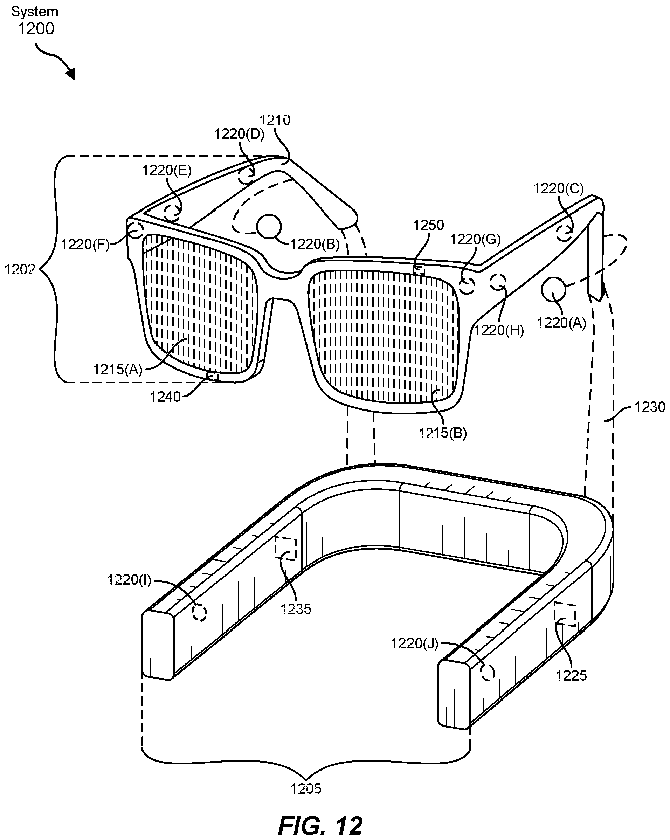

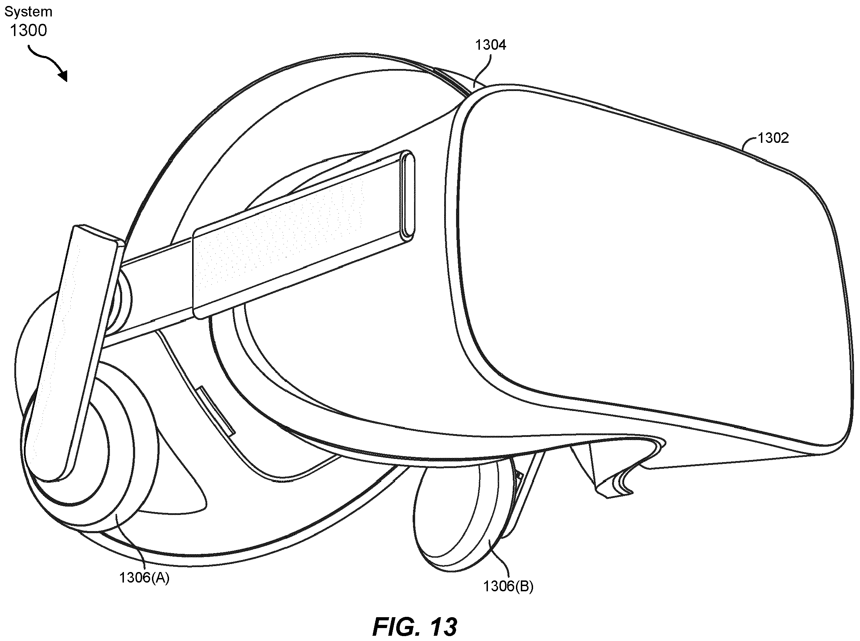

The following will provide, with reference to FIGS. 1-13, a detailed description of OSC-containing waveguides, methods for forming such waveguides, and associated optically anisotropic polymer thin films and substrate. The discussion associated with FIGS. 1-5 includes a description of example waveguide architectures including an organic solid crystal layer. The discussion associated with FIGS. 6-11 relates to the structure and performance of organic solid crystal (OSC)-containing waveguides. The discussion associated with FIGS. 12 and 13 relates to exemplary virtual reality and augmented reality devices that may include one or more OSC layer-containing waveguide as disclosed herein.

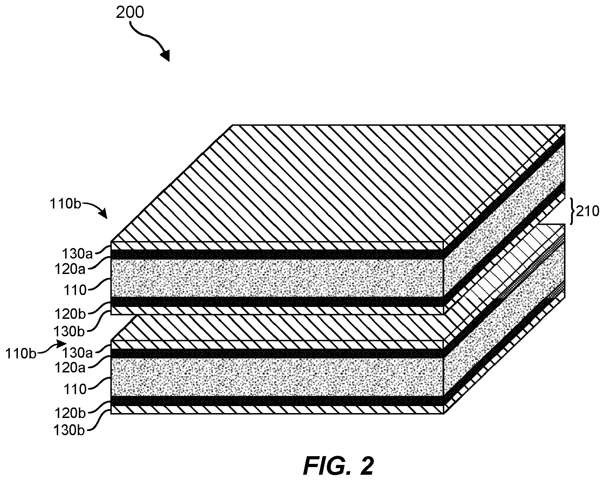

Referring to FIG. 1, shown are perspective views of example planar waveguides that include an OSC substrate. In FIG. 1A, planar waveguide 100a includes, from bottom to top, an OSC substrate 110, an orientation layer 120a, and a diffractive layer 130a containing a plurality of diffractive gratings (not separately shown). Referring to FIG. 1B, a further example planar waveguide 100b includes a second orientation layer 120b and a second diffractive layer 130b disposed over the OSC substrate 110 opposite the first orientation layer 120a and the first diffractive layer 130a. The orientation layers 120a,b may be configured to optically couple the substrate 110 with the respective diffractive layer 130a,b. In some embodiments, the orientation layers 120a,b may be configured to control the orientation of the gratings within the adjacent diffractive layer 130a,b. As will be appreciated, a planar waveguide may include a single OSC substrate or a stack of multiple OSC substrates. Referring to FIG. 2, shown is a stacked waveguide 200 that includes a pair of planar waveguides 100b separated by an air gap 210.

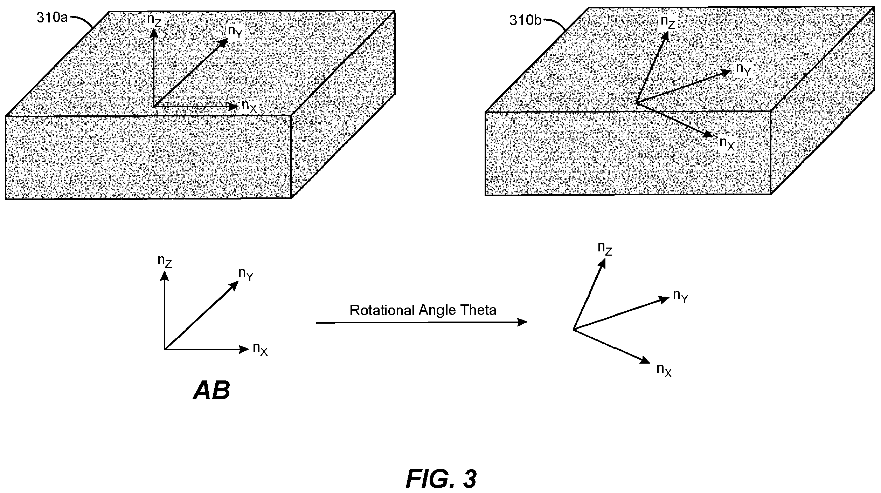

The crystallographic orientation of an OSC substrate (i.e., waveguide body) with respect to its constituent OSC layer is shown schematically in FIG. 3. Referring to FIG. 3A, in some embodiments, the principal axes ($n_x$, $n_y$, $n_z$) of the OSC material may be aligned with the macro-orientation of the waveguide body 310a. Alternatively, referring to FIG. 3B, the principal axes of the OSC material may be rotated, such as by an angle ($\theta$), with respect to the macro-orientation of the waveguide body 310b.

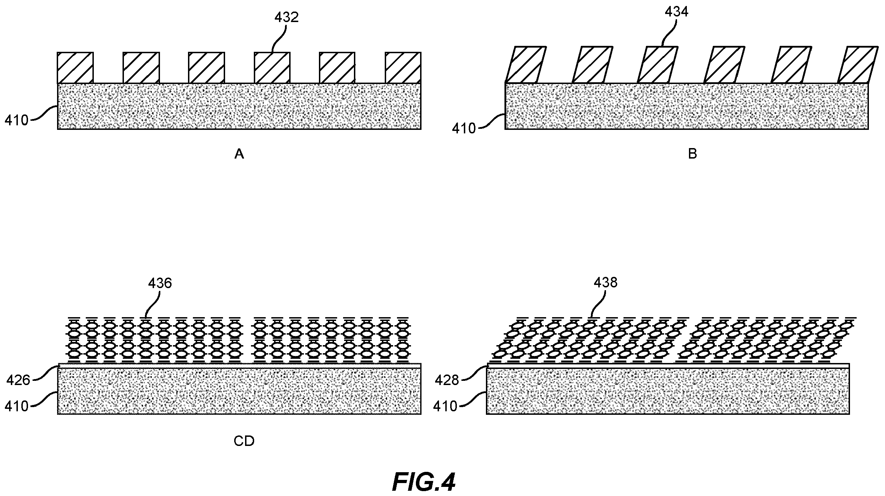

Referring to FIG. 4, shown are cross-sectional views of planar waveguides that include an OSC waveguide body and an overlying grating architecture. In FIG. 4A, an example waveguide includes an OSC waveguide body 410 and a binary surface relief grating 432 overlying the waveguide body 410. In FIG. 4B, an example waveguide includes an OSC waveguide body 410 and a slanted surface relief grating 434. Referring to FIG. 4C, a planar waveguide includes an OSC waveguide body 410, a photoalignment layer 426, and a planar PVH diffractive grating layer 436. Referring to FIG. 4D, a further example planar waveguide includes an OSC waveguide body 410, a photoalignment layer 428, and a slanted PVH diffractive grating layer 438.

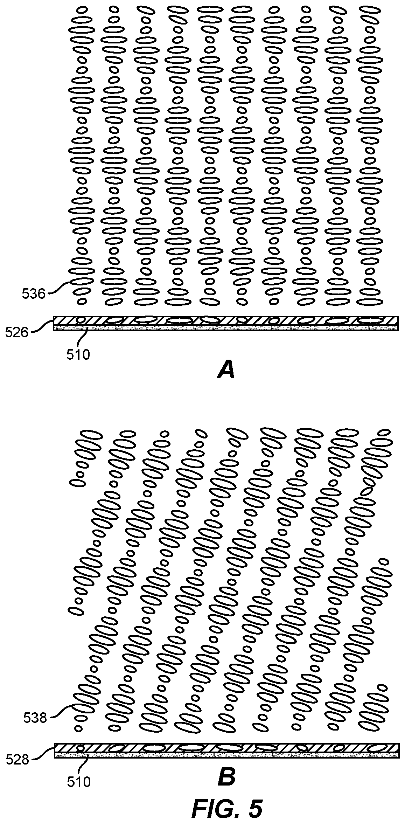

More detailed views of planar and slanted polarization volume holographic (PVH) diffractive gratings are shown in FIG. 5. Referring to FIG. 5A, a waveguide includes, from bottom to top, an OSC substrate 510, a photoalignment layer 526, and a planar PVH diffractive grating layer 536 directly overlying the photoalignment layer 526. Referring to FIG. 5B, a waveguide includes an OSC substrate 510, a photoalignment layer 528 overlying the substrate 510, and a slanted PVH diffractive grating layer 538 overlying the photoalignment layer 528.

Referring to FIG. 6, shown is a cross-sectional view of a waveguide 600 having a waveguide body 610 and an input grating 620 overlying a portion of the waveguide body 610. Waveguide body 610 may include an organic solid crystal. Also illustrated are the path extrema of a monochromatic beam of light entering the waveguide body 610 via input grating 620. As will be appreciated, angular extrema $\Theta_{left}$ and $\Theta_{right}$ define a 1D field-of-view (FOV) for the waveguide 600, where $\Theta_{left}$ may be determined from the geometry of the input grating 620 and the critical angle $\Theta_{critical}$ for total internal reflection within waveguide body 610, and $\Theta_{right}$ may be determined from the geometry of the input grating 620 and the grazing angle $\Theta_{grazing}$. A greater field-of-view may be obtained by increasing a refractive index of the waveguide body 610.

A corresponding waveguide architecture to the structure shown in FIG. 6 is shown in FIG. 7 for multiple wavelengths of incident light. Waveguide 700 includes a waveguide body 710 with input grating 720 and output grating 730 each overlying a respective portion of the waveguide body 710. The path of different light rays for a polychromatic source of light (or separate monochromatic sources of light) are also illustrated and may be calculated from Snell's law. Typically, the field-of-view for a system including multiple wavelengths of light will be less than the field-of-view for any one single constituent wavelength.

In some examples, a waveguide configuration may include one or more waveguide members positioned within a display area of a head-mounted display that are configured to combine images of two or more colors emitted by respective monochromatic emitter arrays to generate at least one polychromatic pupil replication that at least partially defines a viewing eye box.

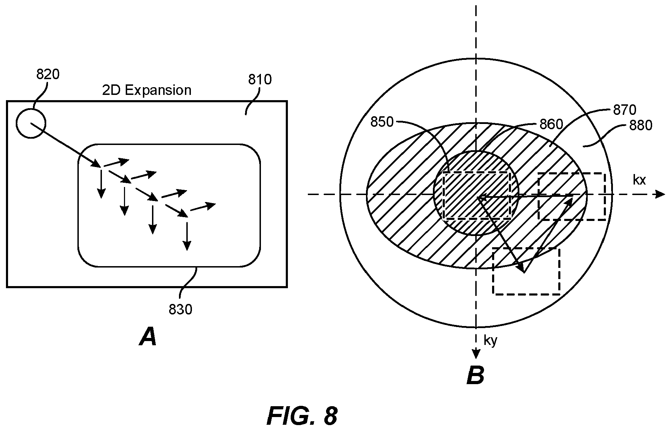

Referring to FIGS. 8A and 8B, illustrated schematically are a 2D pupil replication architecture and k-space rendering for an example wide field-of-view waveguide. As shown in FIG. 8A, a waveguide architecture may include a waveguide body 810 having an input grating 820 and an output grating 830 optically coupled to the input grating 820 via waveguide body 810. Waveguide body 810 may include an organic solid crystal. In certain embodiments, the waveguide may include an output grating located on one or both sides of the waveguide body 810.

As will be appreciated, the ray density for light propagating through and emitted from an optically isotropic waveguide body may be different than (e.g., less than) the ray density for light propagating through and emitted from a waveguide body formed from an anisotropic medium, such as an organic solid crystal. The higher ray density associated with an optically anisotropic waveguide body may be attributed to more profound ray splitting into coupled cavity modes within the waveguide. Ray splitting within an anisotropic waveguide body may beneficially impact the generation of a large field-of-view device.

Referring to FIG. 8B, a plot in k-space shows mapping of a field-of-view (FOV) 850 within air 860 (i.e., prior to coupling into a waveguide body) and within the waveguide body following in-coupling for different contributions of anisotropic 870 and isotropic 880 media, which may correspondingly impact the extent of ray splitting. That is, the extent of ray splitting may be correlated with the extent of joint overlap of the FOV with the anisotropic region 870 and the wider isotropic region 880 of momentum space. In the illustrated example of FIG. 8B, a field-of-view design may assume a refractive index that is no greater than the maximum refractive index of the waveguide body.

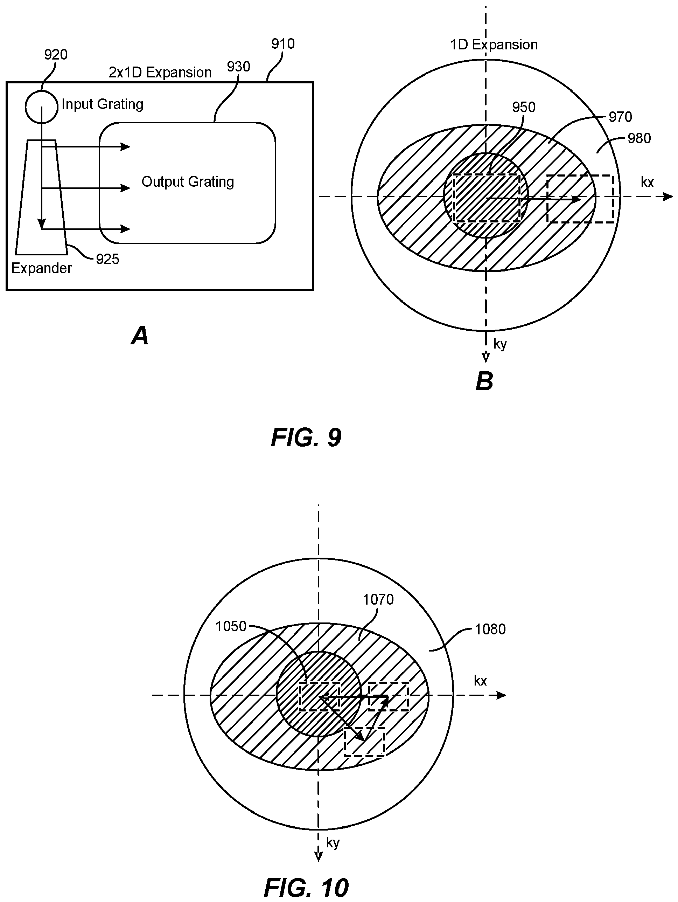

Referring to FIG. 9, illustrated schematically are a 2×1D pupil replication architecture and k-space rendering for a further example wide field-of-view waveguide. As shown in FIG. 9A, a waveguide architecture may include a waveguide body 910 having an input grating 920, an expander region 925, and an output grating 930, where the expander region 925 is located between the input grating 920 and the output grating 930. With such a configuration, principal refractive indices within the waveguide body 910 for regions of input, expansion, and output may be arranged such that the main light ray experiences the largest principal refractive indices. As shown in FIG. 9B, a wide field-of-view 950 may be mapped along one dimension to achieve a desired degree of overlap with anisotropic region 970 and isotropic region 980 of momentum space.

A plot in k-space corresponding to a further example wide field of view waveguide is shown in FIG. 10. The waveguide may be configured such that for in-coupled light the entire field of view 1050 lies within the overlapping area between the anisotropic region 1070 and the isotropic region 1080 of momentum space. A corresponding field-of-view design may assume a refractive index that is no less than the minimum refractive index of the waveguide body.

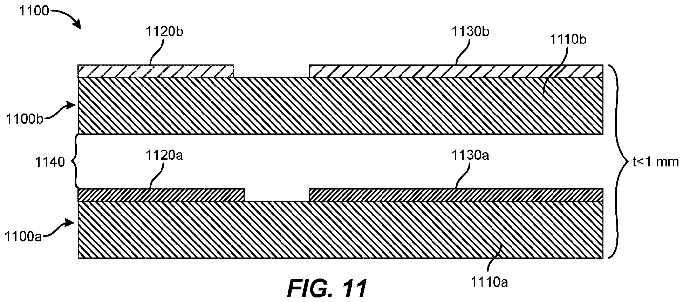

A further waveguide architecture is illustrated in FIG. 11 where in lieu of providing a single waveguide substrate for multiple wavelengths of light, a waveguide configuration 1100 may include separate waveguides 1100a, 1100b each having a separate waveguide body 1110a, 1110b where each waveguide body is configured to propagate a selected wavelength of light. In an example architecture, waveguide 1100a may include a first waveguide body 1110a having corresponding input and output gratings 1120a, 1130a, respectively, and waveguide 1100b may include a second waveguide body 1110b having corresponding input and output gratings 1120b, 1130b. The first waveguide body and associated gratings may be configured to in-couple, reflect, and out-couple a first wavelength of light (e.g., red light), whereas the second waveguide body and associated gratings may be configured to in-couple, reflect, and out-couple a second wavelength of light (e.g., blue light).

In the illustrated embodiment, first and second waveguide bodies may be spaced apart by a low refractive index gap 1140 such as an air gap. Notwithstanding one or more airgaps, by incorporating an anisotropic material into the waveguide bodies, the total thickness (t) of a stacked waveguide configuration 1100 may be substantially decreased relative to an isotropic material-containing waveguide stack. The total stack thickness (t) of example stacked waveguide architectures having two or more optically anisotropic OSC substrates may be less than approximately 1 mm, for example.

As disclosed herein, a waveguide display element includes a waveguide body and respective in-coupling and out-coupling grating structures for directing light into and out of the waveguide body. Example grating structures include volume Bragg gratings, surface relief gratings and polarization volume holographic (PVH) gratings. In accordance with various embodiments, the waveguide body may be formed from an optically anisotropic organic solid crystal (OSC) material and may include one or a plurality of OSC layers and/or exhibit a planar or non-planar geometry. A waveguide body including an optically anisotropic medium may improve the ray splitting dynamics of internally reflected light, which may improve both the brightness and uniformity of a projected image as well as enhance the operational efficiency of the waveguide.

Multiple OSC layers may be mutually mis-orientated, which may improve the optical performance of the waveguide display element. The organic solid crystal layer(s) may be birefringent. That is, according to some embodiments, each OSC layer within the waveguide body may have a refractive index difference amongst one pair of principal indices of at least approximately 0.01.

A waveguide display element may additionally include an interlayer between the waveguide body and the grating structures. The interlayer may be configured to affix the gratings to the waveguide body and control the geometry and orientation of the grating structures. In some examples, the interlayer may have a refractive index along at least one dimension that is greater than or equal to the extraordinary refractive index (ne) of the waveguide body. An OSC-integrated waveguide may provide low weight and enhanced color uniformity in an all-day-wearable form factor.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Artificial-reality systems may be implemented in a variety of different form factors and configurations. Some artificial-reality systems may be designed to work without near-eye displays (NEDs). Other artificial-reality systems may include an NED that also provides visibility into the real world (e.g., augmented-reality system 1200 in FIG. 12) or that visually immerses a user in an artificial reality (e.g., virtual-reality system 1300 in FIG. 13). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 12, augmented-reality system 1200 may include an eyewear device 1202 with a frame 1210 configured to hold a left display device 1215(A) and a right display device 1215(B) in front of a user's eyes. Display devices 1215(A) and 1215(B) may act together or independently to present an image or series of images to a user. While augmented-reality system 1200 includes two displays, embodiments of this disclosure may be implemented in augmented-reality systems with a single NED or more than two NEDs.

In some embodiments, augmented-reality system 1200 may include one or more sensors, such as sensor 1240. Sensor 1240 may generate measurement signals in response to motion of augmented-reality system 1200 and may be located on substantially any portion of frame 1210. Sensor 1240 may represent a position sensor, an inertial measurement unit (IMU), a depth camera assembly, a structured light emitter and/or detector, or any combination thereof. In some embodiments, augmented-reality system 1200 may or may not include sensor 1240 or may include more than one sensor. In embodiments in which sensor 1240 includes an IMU, the IMU may generate calibration data based on measurement signals from sensor 1240. Examples of sensor 1240 may include, without limitation, accelerometers, gyroscopes, magnetometers, other suitable types of sensors that detect motion, sensors used for error correction of the IMU, or some combination thereof.

Augmented-reality system 1200 may also include a microphone array with a plurality of acoustic transducers 1220(A)-1220(J), referred to collectively as acoustic transducers 1220. Acoustic transducers 1220 may be transducers that detect air pressure variations induced by sound waves. Each acoustic transducer 1220 may be configured to detect sound and convert the detected sound into an electronic format (e.g., an analog or digital format). The microphone array in FIG. 12 may include, for example, ten acoustic transducers: 1220(A) and 1220(B), which may be designed to be placed inside a corresponding ear of the user, acoustic transducers 1220(C), 1220(D), 1220(E), 1220(F), 1220(G), and 1220(H), which may be positioned at various locations on frame 1210, and/or acoustic transducers 1220(I) and 1220(J), which may be positioned on a corresponding neckband 1205.

In some embodiments, one or more of acoustic transducers 1220(A)-(F) may be used as output transducers (e.g., speakers). For example, acoustic transducers 1220(A) and/or 1220(B) may be earbuds or any other suitable type of headphone or speaker.

The configuration of acoustic transducers 1220 of the microphone array may vary. While augmented-reality system 1200 is shown in FIG. 12 as having ten acoustic transducers 1220, the number of acoustic transducers 1220 may be greater or less than ten. In some embodiments, using higher numbers of acoustic transducers 1220 may increase the amount of audio information collected and/or the sensitivity and accuracy of the audio information. In contrast, using a lower number of acoustic transducers 1220 may decrease the computing power required by an associated controller 1250 to process the collected audio information. In addition, the position of each acoustic transducer 1220 of the microphone array may vary. For example, the position of an acoustic transducer 1220 may include a defined position on the user, a defined coordinate on frame 1210, an orientation associated with each acoustic transducer 1220, or some combination thereof.

Acoustic transducers 1220(A) and 1220(B) may be positioned on different parts of the user's ear, such as behind the pinna, behind the tragus, and/or within the auricle or fossa. Or, there may be additional acoustic transducers 1220 on or surrounding the ear in addition to acoustic transducers 1220 inside the ear canal. Having an acoustic transducer 1220 positioned next to an ear canal of a user may enable the microphone array to collect information on how sounds arrive at the ear canal. By positioning at least two of acoustic transducers 1220 on either side of a user's head (e.g., as binaural microphones), augmented-reality device 1200 may simulate binaural hearing and capture a 3D stereo sound field around about a user's head. In some embodiments, acoustic transducers 1220(A) and 1220(B) may be connected to augmented-reality system 1200 via a wired connection 1230, and in other embodiments acoustic transducers 1220(A) and 1220(B) may be connected to augmented-reality system 1200 via a wireless connection (e.g., a Bluetooth connection). In still other embodiments, acoustic transducers 1220(A) and 1220(B) may not be used at all in conjunction with augmented-reality system 1200.

Acoustic transducers 1220 on frame 1210 may be positioned along the length of the temples, across the bridge, above or below display devices 1215(A) and 1215(B), or some combination thereof. Acoustic transducers 1220 may be oriented such that the microphone array is able to detect sounds in a wide range of directions surrounding the user wearing the augmented-reality system 1200. In some embodiments, an optimization process may be performed during manufacturing of augmented-reality system 1200 to determine relative positioning of each acoustic transducer 1220 in the microphone array.

In some examples, augmented-reality system 1200 may include or be connected to an external device (e.g., a paired device), such as neckband 1205. Neckband 1205 generally represents any type or form of paired device. Thus, the following discussion of neckband 1205 may also apply to various other paired devices, such as charging cases, smart watches, smart phones, wrist bands, other wearable devices, hand-held controllers, tablet computers, laptop computers, other external compute devices, etc.

As shown, neckband 1205 may be coupled to eyewear device 1202 via one or more connectors. The connectors may be wired or wireless and may include electrical and/or non-electrical (e.g., structural) components. In some cases, eyewear device 1202 and neckband 1205 may operate independently without any wired or wireless connection between them. While FIG. 12 illustrates the components of eyewear device 1202 and neckband 1205 in example locations on eyewear device 1202 and neckband 1205, the components may be located elsewhere and/or distributed differently on eyewear device 1202 and/or neckband 1205. In some embodiments, the components of eyewear device 1202 and neckband 1205 may be located on one or more additional peripheral devices paired with eyewear device 1202, neckband 1205, or some combination thereof.

Pairing external devices, such as neckband 1205, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 1200 may be provided by a paired device or shared between a paired device and an eyewear device, thus reducing the weight, heat profile, and form factor of the eyewear device overall while still retaining desired functionality. For example, neckband 1205 may allow components that would otherwise be included on an eyewear device to be included in neckband 1205 since users may tolerate a heavier weight load on their shoulders than they would tolerate on their heads. Neckband 1205 may also have a larger surface area over which to diffuse and disperse heat to the ambient environment. Thus, neckband 1205 may allow for greater battery and computation capacity than might otherwise have been possible on a stand-alone eyewear device. Since weight carried in neckband 1205 may be less invasive to a user than weight carried in eyewear device 1202, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 1205 may be communicatively coupled with eyewear device 1202 and/or to other devices. These other devices may provide certain functions (e.g., tracking, localizing, depth mapping, processing, storage, etc.) to augmented-reality system 1200. In the embodiment of FIG. 12, neckband 1205 may include two acoustic transducers (e.g., 1220(I) and 1220(J)) that are part of the microphone array (or potentially form their own microphone subarray). Neckband 1205 may also include a controller 1225 and a power source 1235.

Acoustic transducers 1220(I) and 1220(J) of neckband 1205 may be configured to detect sound and convert the detected sound into an electronic format (analog or digital). In the embodiment of FIG. 12, acoustic transducers 1220(I) and 1220(J) may be positioned on neckband 1205, thereby increasing the distance between the neckband acoustic transducers 1220(I) and 1220(J) and other acoustic transducers 1220 positioned on eyewear device 1202. In some cases, increasing the distance between acoustic transducers 1220 of the microphone array may improve the accuracy of beamforming performed via the microphone array. For example, if a sound is detected by acoustic transducers 1220(C) and 1220(D) and the distance between acoustic transducers 1220(C) and 1220(D) is greater than, e.g., the distance between acoustic transducers 1220(D) and 1220(E), the determined source location of the detected sound may be more accurate than if the sound had been detected by acoustic transducers 1220(D) and 1220(E).

Controller 1225 of neckband 1205 may process information generated by the sensors on neckband 1205 and/or augmented-reality system 1200. For example, controller 1225 may process information from the microphone array that describes sounds detected by the microphone array. For each detected sound, controller 1225 may perform a direction-of-arrival (DOA) estimation to estimate a direction from which the detected sound arrived at the microphone array. As the microphone array detects sounds, controller 1225 may populate an audio data set with the information. In embodiments in which augmented-reality system 1200 includes an inertial measurement unit, controller 1225 may compute all inertial and spatial calculations from the IMU located on eyewear device 1202. A connector may convey information between augmented-reality system 1200 and neckband 1205 and between augmented-reality system 1200 and controller 1225. The information may be in the form of optical data, electrical data, wireless data, or any other transmittable data form. Moving the processing of information generated by augmented-reality system 1200 to neckband 1205 may reduce weight and heat in eyewear device 1202, making it more comfortable to the user.

Power source 1235 in neckband 1205 may provide power to eyewear device 1202 and/or to neckband 1205. Power source 1235 may include, without limitation, lithium ion batteries, lithium-polymer batteries, primary lithium batteries, alkaline batteries, or any other form of power storage. In some cases, power source 1235 may be a wired power source. Including power source 1235 on neckband 1205 instead of on eyewear device 1202 may help better distribute the weight and heat generated by power source 1235.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 1300 in FIG. 13, that mostly or completely covers a user's field-of-view. Virtual-reality system 1300 may include a front rigid body 1302 and a band 1304 shaped to fit around a user's head. Virtual-reality system 1300 may also include output audio transducers 1306(A) and 1306(B). Furthermore, while not shown in FIG. 13, front rigid body 1302 may include one or more electronic elements, including one or more electronic displays, one or more inertial measurement units (IMUs), one or more tracking emitters or detectors, and/or any other suitable device or system for creating an artificial reality experience.

Artificial-reality systems may include a variety of types of visual feedback mechanisms. For example, display devices in augmented-reality system 1200 and/or virtual-reality system 1300 may include one or more liquid crystal displays (LCDs), light emitting diode (LED) displays, organic LED (OLED) displays, digital light project (DLP) micro-displays, liquid crystal on silicon (LCoS) micro-displays, and/or any other suitable type of display screen. Artificial-reality systems may include a single display screen for both eyes or may provide a display screen for each eye, which may allow for additional flexibility for varifocal adjustments or for correcting a user's refractive error. Some artificial-reality systems may also include optical subsystems having one or more lenses (e.g., conventional concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some artificial-reality systems may include one or more projection systems. For example, display devices in augmented-reality system 1200 and/or virtual-reality system 1300 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

Artificial-reality systems may also include various types of computer vision components and subsystems. For example, augmented-reality system 1200 and/or virtual-reality system 1300 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

Artificial-reality systems may also include one or more input and/or output audio transducers. In the examples shown in FIG. 13, output audio transducers 1306(A) and 1306(B) may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

While not shown in FIG. 12, artificial-reality systems may include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the present disclosure. The embodiments disclosed herein should be considered in all respects illustrative and not restrictive. Reference should be made to any claims appended hereto and their equivalents in determining the scope of the present disclosure.

As used herein, the term "approximately" in reference to a particular numeric value or range of values may, in certain embodiments, mean and include the stated value as well as all values within 10% of the stated value. Thus, by way of example, reference to the numeric value "50" as "approximately 50" may, in certain embodiments, include values equal to $50\pm5$, i.e., values within the range 45 to 55.

As used herein, the term "substantially" in reference to a given parameter, property, or condition may mean and include to a degree that one of ordinary skill in the art would understand that the given parameter, property, or condition is met with a small degree of variance, such as within acceptable manufacturing tolerances. By way of example, depending on the particular parameter, property, or condition that is substantially met, the parameter, property, or condition may be at least approximately 90% met, at least approximately 95% met, or even at least approximately 99% met.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

It will be understood that when an element such as a layer or a region is referred to as being formed on, deposited on, or disposed "on" or "over" another element, it may be located directly on at least a portion of the other element, or one or more intervening elements may also be present. In contrast, when an element is referred to as being "directly on" or "directly over" another element, it may be located on at least a portion of the other element, with no intervening elements present.

While various features, elements or steps of particular embodiments may be disclosed using the transitional phrase "comprising," it is to be understood that alternative embodiments, including those that may be described using the transitional phrases "consisting of" or "consisting essentially of," are implied. Thus, for example, implied alternative embodiments to an OSC layer that comprises or includes anthracene include embodiments where an OSC layer consists essentially of anthracene and embodiments where an OSC layer consists of anthracene.

**Claims**

1. An optical element comprising:

   a waveguide body extending from an input end to an output end and configured to guide light by total internal reflection from the input end to the output end;
   an input coupling structure located proximate to the input end for coupling light into the waveguide body; and
   an output coupling structure located proximate to the output end for coupling light out of the waveguide body,
   wherein the waveguide body comprises at least one layer of an optically anisotropic organic solid crystal.

2. The optical element of claim 1, wherein the input coupling structure and the output coupling structure each comprise a plurality of diffractive gratings;
   preferably wherein:

   the diffractive gratings are selected from the group consisting of volume Bragg gratings, polarization volume holographic (PVH) gratings and surface relief gratings (SRG); and/or
   the diffractive gratings comprise binary phase gratings or slanted gratings.

3. The optical element of claim 1 or claim 2, wherein the optical element comprises a planar waveguide.

4. The optical element of any preceding claim, wherein the optical element comprises a non-planar waveguide.

5. The optical element of any preceding claim, wherein the at least one organic solid crystal layer comprises a molecule selected from the group consisting of anthracene, tetracene, pentacene, saturated or unsaturated polycyclic hydrocarbons, nitrogen-, sulfur-, or oxygen-containing heterocycles, quinolines, benzothiophenes, benzopyrans, bent and asymmetric acenes, 2,6-naphthalene dicarboxylic acid, and 2,6-dimethyl carboxylic esters.

6. The optical element of any preceding claim, wherein the at least one organic solid crystal layer comprises a single crystal.

7. The optical element of any preceding claim, wherein the waveguide body comprises a refractive index of at least approximately 1.5 and a birefringence of at least approximately 0.01.

8. The optical element of any preceding claim, wherein the waveguide body comprises principal refractive indices ($n_x$, $n_y$, $n_z$), wherein $n_x \neq n_y \neq n_z$, $n_x = n_y \neq n_z$, $n_x = n_z \neq n_y$, or $n_y = n_z \neq n_x$.

9. The optical element of any preceding claim, wherein the optical element presents a 2D diagonal field-of-view of at least approximately 10°.

10. The optical element of any preceding claim, wherein the waveguide body comprises a single optically anisotropic organic solid crystal layer having a thickness of less than approximately 600 micrometers.

11. The optical element of any preceding claim, wherein:

the waveguide body comprises a pair of optically anisotropic organic solid crystal layers and has a thickness of less than approximately 1.5 mm; or

the waveguide body comprises three optically anisotropic organic solid crystal layers and has a thickness of less than approximately 1.8 mm.

12. A waveguide comprising:

at least one substrate comprising an optically anisotropic organic solid crystal layer; and
a coupling structure disposed over each organic solid crystal layer.

13. The waveguide of claim 12, wherein the at least one substrate comprises a single crystal organic solid crystal layer;

preferably wherein each organic solid crystal layer comprises a refractive index of at least approximately 1.5 and a birefringence of at least approximately 0.01;
further preferably wherein the coupling structure comprises a planar or slanted polarization volume holographic (PVH) grating.

14. A waveguide comprising:

an optically anisotropic organic solid crystal substrate configured to guide light; and
a plurality of diffractive gratings disposed over the optically anisotropic organic solid crystal substrate, wherein the optically anisotropic organic solid crystal comprises a refractive index of at least approximately 1.5 and a birefringence of at least approximately 0.01.

15. The waveguide of claim 14, wherein the optically anisotropic organic solid crystal substrate presents a 2D diagonal field-of-view of at least approximately 10°.

110a

130a
120a
110

**FIG. 1A**

110b

130a
120b
110
120b
130b

**FIG. 1B**

200

110b

130a
120a
110
120b
130b

110b
130a
120a
110
120b
130b

210

**FIG. 2**

FIG. 3

FIG.4

EP 4 339 666 A2

536

526

510

*A*

538

528

510

*B*

*FIG. 5*

**FIG. 6**

**FIG. 7**

**FIG. 8**

**FIG. 9**

**FIG. 10**

1100

1120b        1130b     1110b

1100b

1140

1120a        1130a

1100a

1110a

t<1 mm

**FIG. 11**

**FIG. 12**

System
1300

1304

1302

1306(A)

1306(B)

**FIG. 13**